# EUROPÄISCHE PATENTANMELDUNG

(11) **EP 3 629 450 A1**
(43) Veröffentlichungstag der Anmeldung: **01.04.2020**
(21) Anmeldenummer: 18197448.6
(22) Anmeldetag: 28.09.2018
(51) Int. Cl.: H02K 5/20, H02K 15/14, H02K 9/19, H02K 41/02

(54) **ELEKTROMOTOR MIT FLÜSSIGKEITSKÜHLUNG**

(71) Anmelder: Siemens Aktiengesellschaft, 80333 München (DE)
(72) Erfinder: Bott, Erich, 97618 Hollstadt (DE); Seufert, Reiner, 97616 Salz (DE); Vollmer, Rolf, 36129 Gersfeld (DE); Cornely, Stefan, 97616 Bad Neustadt (DE)

(57) **Zusammenfassung**

Die Erfindung betrifft einen Elektromotor (1, 10) mit mindestens einem Kühlkanal, wobei der Kühlkanal (5) mittels eines generativen Fertigungsverfahrens erzeugt ist. Für das Sicherstellen einer möglichst stoffschlüssigen Verbindung und damit für einen verbesserten Wärmeübergang und eine verbesserte Kühlleistung wird der Kühlkanal (5) durch den Einsatz des generativen Verfahrens Kaltgasspritzen erzeugt. Hierbei wird der Kühlkanal durch eine aufgespritzte Schicht aus Edelstahl oder Aluminium gebildet, in die eine dem Kühlkanal (5) entsprechende Nut gefräst wird, welche mit einer wasserlöslichen Substanz mit dem gleichen Verfahren gefüllt und anschließend wieder mit Edelstahl oder Aluminium verschlossen wird. Im letzten Fertigungsschritt wird die wasserlösliche Substanz ausgespült, so dass der Kühlkanal (5) entsteht. Das Verfahren ist sowohl bei flüssigkeitsgekühlten Linearmotoren als auch bei flüssigkeitsgekühlten Rotationsmotoren einsetzbar.

## Beschreibung

Die Erfindung betrifft einen Elektromotor mit mindestens einem Kühlkanal.

Der Artikel "Elektromotoren können beispielsweise als Linearmotor oder als Rotationsmotor ausgebildet sein. Für besondere Einsatzbereiche werden derartige Motoren mit einer Flüssigkeitskühlung, meist einer Wasserkühlung versehen, wobei die Wasserkühlung Wärme vom Motor ableitet.

Aus der DE 10 2007 020 057 A1 ist ein Linearmotor mit integrierter Kühlung bekannt. Der Linearmotor weist ein Primärteil und ein Sekundärteil auf, wobei das Primärteil und das Sekundärteil in einer Bewegungsrichtung des Linearmotors bewegbar ist. Der Linearmotor weist eine aus Kühlkanälen bestehende Kühlung auf, wobei die Einzelbleche des Blechpakets des Primärteils und/oder Sekundärteils derart ausgebildet sind, dass beim Zusammenfügen der Einzelbleche des Blechpakets die Kühlkanäle ausgebildet sind.

Der Erfindung liegt die Aufgabe zu Grunde, einen Elektromotor mit Flüssigkeitskühlung mit einem verbesserten Wärmeübergang und eine verbesserte Kühlleistung auf einfache und kostengünstige Weise herzustellen und auch ein derartiges Verfahren zur Herstellung eines derartigen Elektromotors anzugeben.

Diese Aufgabe wird durch einen Elektromotor mit mindestens einem Kühlkanal gelöst, wobei der Kühlkanal mittels eines generativen Fertigungsverfahrens dadurch erzeugt ist, dass der Kühlkanal durch eine erste aufgespritzte Schicht gebildet wird, in die eine dem Kühlkanal entsprechende Nut gefräst ist, welche mit einer den Kühlkanal formenden wasserlöslichen Substanz gefüllt wird, die anschließend mit einer zweiten aufgespritzten Schicht verschlossen ist, so dass nach Ausspülen der wasserlöslichen Substanz der Kühlkanal zur Kühlung des Elektromotors gebildet wird.

Diese Aufgabe wird weiter durch ein Verfahren zur Herstellung eines Elektromotors gelöst, bei dem ein Kühlkanal mittels eines generativen Fertigungsverfahrens dadurch erzeugt wird, dass der Kühlkanal durch eine erste aufgespritzte Schicht gebildet wird, in die eine dem Kühlkanal entsprechende Nut gefräst wird, welche mit einer den Kühlkanal formenden wasserlöslichen Substanz gefüllt wird, die anschließend mit einer zweiten aufgespritzten Schicht verschlossen ist, so dass nach Ausspülen der wasserlöslichen Substanz der Kühlkanal zur Kühlung des Elektromotors gebildet wird.

Diese Aufgabe wird weiterhin durch einen Kühler insbesondere für einen Linearmotor gelöst, wobei der Kühler mindestens einen Kühlkanal aufweist, wobei der Kühlkanal mittels eines generativen Fertigungsverfahrens dadurch erzeugt ist, dass der Kühlkanal durch eine erste aufgespritzte Schicht gebildet wird, in die eine dem Kühlkanal entsprechende Nut gefräst ist, welche mit einer den Kühlkanal formenden wasserlöslichen Substanz gefüllt wird, die anschließend mit einer zweiten aufgespritzten Schicht verschlossen ist, so dass nach Ausspülen der wasserlöslichen Substanz der Kühlkanal zur Kühlung des Elektromotors gebildet wird.

Der Erfindung liegt die Erkenntnis zugrunde, dass bei konventionell über Kühlrohre oder Kühlschlangen gekühlten Elektromotoren die Flüssigkeitskühlung, meist Wasserkühlung, konstruktiv bedingt meist nur eine kleine Berührfläche ermöglicht, so dass eine Entwärmung des Elektromotors nicht optimal ist. Insbesondere bei Linearmotoren wird dabei zur thermischen Abschirmung des sogenannten Aktivteils oft ein sogenannter Präzisionskühler eingesetzt, welcher ebenfalls flüssigkeitsgekühlt ist. Auch die dort angebrachten Kühlrohre bringen meist nur eine begrenzte Kühlleistung, aufgrund des konstruktionsbedingt eher problematischen Wärmeübergangs.

An diesem Punkt setzt die Erfindung an und auf überraschend einfache Weise ermöglicht ein mit einem generativen Fertigungsverfahren hergestellten Kühlkanal an die die jeweiligen thermischen Bedingungen gezielt anpassbaren optimalen Wärmeübergang. Hierzu wird der Kühlkanal durch eine erste aufgespritzte Schicht gebildet, in die dann eine dem Kühlkanal entsprechende Nut gefräst wird. Diese wird anschließend mit einer den Kühlkanal formenden wasserlöslichen Substanz gefüllt, die im nächsten Schritt mit einer zweiten aufgespritzten Schicht, wiederum verschlossen wird. Nach Ausspülen der wasserlöslichen Substanz entsteht so ein optimaler Kühlkanal zur Kühlung des Elektromotors. Bei Linearmotoren können derartige Kühlkanäle in einen separaten Präzisionskühler eingebracht werden, während bei Rotationsmotoren die Kühlkanäle in entsprechender Weise im Gehäuse des Motors an den zu entwärmenden Stellen gezielt vorgesehen werden.

Alles in allem ergibt sich auf überraschender einfacher Weise ein deutlich verbesserter Wärmeübergang und damit eine deutlich erhöhte Kühlleistung, aufgrund einer stoffflüssigen Verbindung.

Vorteilhafte Ausgestaltungsformen sind in den Unteransprüchen enthalten.

Als sehr vorteilhafte Methode hat sich gezeigt, dass der Kühlkanal mittels des generativen Fertigungsverfahrens Kaltgasspritzen gefertigt ist.

Bewährt hat sich dabei, dass als generatives Fertigungsverfahren das MPA-Verfahren (MPA = Metal Powder Application Technique) verwendet wird.

Als Materialien für die erste und/oder die zweite aufgespritzte Schicht kommen bevorzugt Edelstahl, Aluminium oder Kupfer zum Einsatz. Diese Materialien sind zum einen formstabil und gleichzeitig korrosionsbeständig und damit langlebig.

Vorteilhafte Anwendungsfälle sind bei allen flüssigkeitsgekühlten, insbesondere wassergekühlten Elektromotoren gegeben, wobei der Elektromotor ein flüssigkeitsgekühlten Linearmotor oder ein flüssigkeitsgekühlter Rotationsmotor ist.

Eine aufwandsarme und sichere Zuführung des Kühlmittels an den Kühlkanal kann dadurch noch sicherer und einfacher gestaltet werden, dass an den Kühlkanal Anschlussstutzen angeformt sind, die ebenfalls in einem generativen Fertigungsverfahrens erzeugt sind.

Optimale Kühlergebnisse können dadurch erzielt werden, dass die erste und/oder die zweite aufgespritzte Schicht bezüglich Form und Eigenschaften derart ausgebildet ist, dass eine möglichst große Kontaktfläche entsteht.

Eine Ausnutzung natürlicher Fließ- und damit auch Kühleffekte wird dadurch sichergestellt und optimiert, dass der Kühlkanal meanderförmig geformt ist.

Ein gewohnter und bewährter Aufbau eines Linearmotors wird dadurch ermöglicht, dass der Elektromotor ein flüssigkeitsgekühlten Linearmotor mit einem Primärteil und mindestens einem Sekundärteil ist und der Kühlkanal in einem separaten auf dem Primärteil angeordneten Kühler angeordnet ist.

Ein gewohnter und bewährter Aufbau eines Rotationsmotors wird dadurch ermöglicht, dass der Elektromotor ein flüssigkeitsgekühlten Rotationsmotor ist, wobei der Kühlkanal in einem druckgegossenen Gehäuse durch die Kombination aus additiven und zerspanenden Verfahren erzeugt ist.

Im Folgenden wird die Erfindung anhand der in den Figuren dargestellten Ausführungsbeispiele näher beschrieben und erläutert.

Es zeigen:
- FIG 1: eine Explosionsdarstellung eines Linearmotors mit einem Kühler für eine Flüssigkeitskühlung,
- FIG 2: eine Ansicht eines konventionellen Kühlers mit Kühlrohr für einen Linearmotor von unten,
- FIG 3: eine Ansicht eines ersten Ausführungsbeispiels eines Kühlers mit generativ gefertigtem Kühlkanal für einen Linearmotor von unten,
- FIG 4: eine Ansicht eines zweiten Ausführungsbeispiels eines Kühlers mit generativ gefertigtem Kühlkanal für einen Linearmotor von unten,
- FIG 5: ein Gehäuse eines Rotationsmotors mit generativ gefertigtem Kühlkanal und
- FIG 6: eine Prinzipdarstellung eines Ausschnitts eines Motorteils eines Elektromotors mit generativ gefertigtem Kühlkanal.

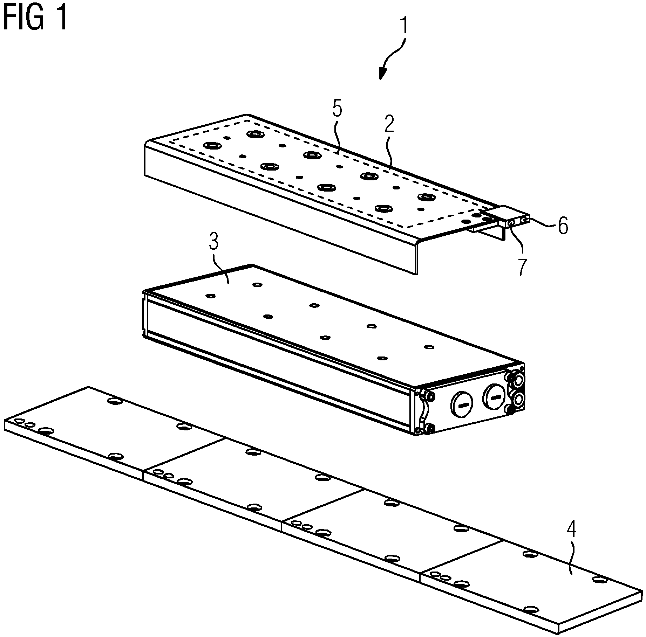

FIG 1 zeigt eine Explosionsdarstellung eines Linearmotors 1 mit einem Kühler 2 für eine Flüssigkeitskühlung. Der Linearmotor 1 besteht aus einem Primärteil 3 sowie aus einem oder mehreren Sekundärteilen 4. Für eine erhöhte Entwärmung des Primärteils 3 ist der Kühler 5 vorgesehen, der Anschlussstutzen 6 und 7 zur Zuführung einer Kühlflüssigkeit aufweist. Mit einer gestrichelten Linie ist der Kühlkanal 5 zwischen dem Zulauf und dem Ablauf über die Anschlussstutzen 6 und 7 visualisiert.

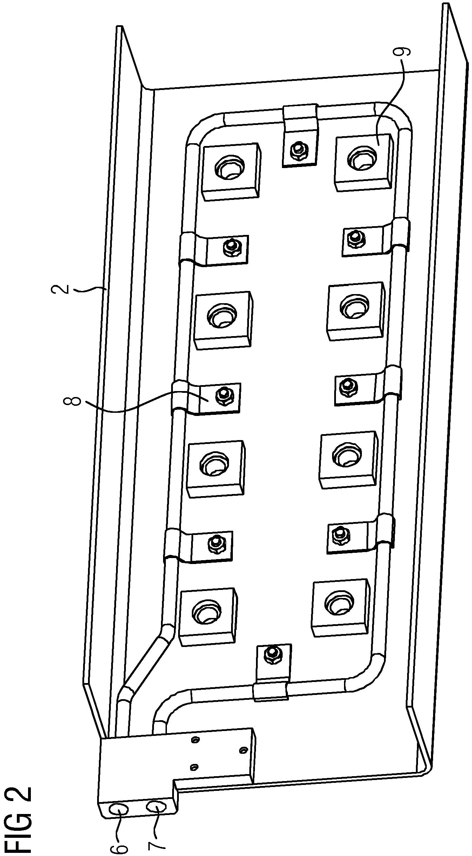

Die Besonderheit des in FIG 1 dargestellten Linearmotors besteht darin, dass der Kühlkanal nicht in konventioneller Weise (vergleiche FIG 2) aus einem aufgesetzten Kühlrohr besteht, welches nur eine eingeschränkte Kühlwirkung aufweist, sondern dass der Kühlkanal 5 mittels eines generativen Fertigungsverfahrens erzeugt ist, wobei für das Sicherstellen einer möglichst stoffflüssigen Verbindung und damit für einen verbesserten Wärmeübergang und eine verbesserte Kühlleistung der Kühlkanal 5 durch den Einsatz des generativen Verfahrens Kaltgasspritzen erzeugt ist. Hierbei wird der Kühlkanal 5 durch eine erste aufgespritzte Schicht, insbesondere aus Edelstahl oder Aluminium gebildet, in die eine dem Kühlkanal 5 entsprechende Nut gefräst wird, welche dann mit einer wasserlöslichen Substanz mit dem gleichen Verfahren gefüllt und anschließend wieder mit Edelstahl oder Aluminium durch eine zweite aufgespritzte Schicht verschlossen wird. Im letzten Fertigungsschritt wird dann die wasserlösliche Substanz ausgespült, so dass der Kühlkanal 5 entsteht.

FIG 2 zeigt eine Ansicht eines Kühlers 2 für einen Linearmotor von unten. Der Kühler 2 besteht aus Kühlkanälen 5 mit Anschlussstutzen 6 und 7 zur Zuführung einer Flüssigkeitskühlung. Die den Kühlkanal 5 bildenden Kühlrohre sind mittels einer Haltevorrichtung am Grundkörper des Kühlers 2 befestigt. Des Weiteren sind Distanzstücke 9 vorgesehen, die als Distanzausgleich dienen.

Wie bereits erwähnt, handelt es sich bei dem in FIG 2 dargestellten Kühler 2, beispielsweise um einen Präzisionskühler für einen Linearmotor, wie er bisher zum Einsatz kam.

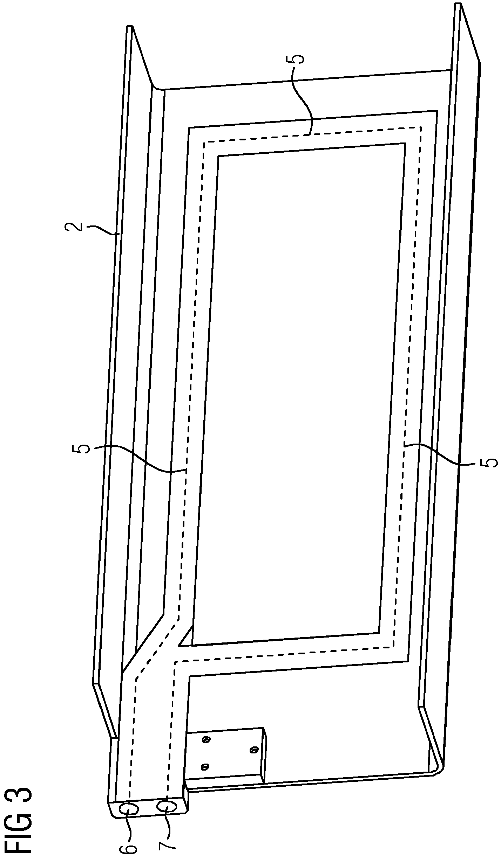

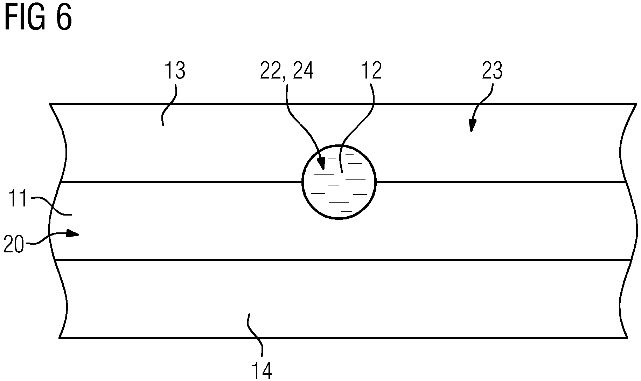

FIG 3 zeigt eine Ansicht eines ersten Ausführungsbeispiels eines Kühlers 2 mit generativ gefertigtem Kühlkanal 5 für einen Linearmotor von unten. Dabei werden die bereits im Zusammenhang mit FIG 2 eingeführten Bezugszeichen verwendet. Im Gegensatz zu dem in FIG 2 dargestellten Ausführungsbeispiel eines bekannten Kühlers ist der in FIG 3 dargestellte Kühler 2, d.h. der Kühlkanal 5 mittels eines generativen Fertigungsverfahrens erzeugt. Hierzu wird in einem ersten Ausführungsbeispiel eine erste aufgespritzte Schicht gebildet, in die eine dem Kühlkanal 5 entsprechende Nut gefräst wird (vergleiche FIG 6), welche mit einer wasserlöslichen Substanz mit dem gleichen Verfahren gefüllt und anschließend wieder mit Edelstahl oder Aluminium verschlossen wird. Bei der Fertigung wird im letzten Fertigungsschritt die wasserlösliche Substanz ausgespült, so dass der Kühlkanal 5 entsteht. Hierdurch entsteht auf überraschend einfache Weise ein besserer Übergang und damit eine bessere Kühlleistung aufgrund einer stoffflüssigen Verbindung des Kühlkanals 5 mit dem gesamten zu kühlenden Grundmaterial. Dies wird im Vergleich mit dem in FIG 2 dargestellten konventionellen Kühler 2 mit Kühlrohren anschaulich ersichtlich. Das Aufbringen der jeweiligen Aluminium- oder Edelstahlstruktur mit integriertem Kühlkanal 5 wird auch als sogenanntes Kaltgasspritzen (per cold gas spraying) bezeichnet.

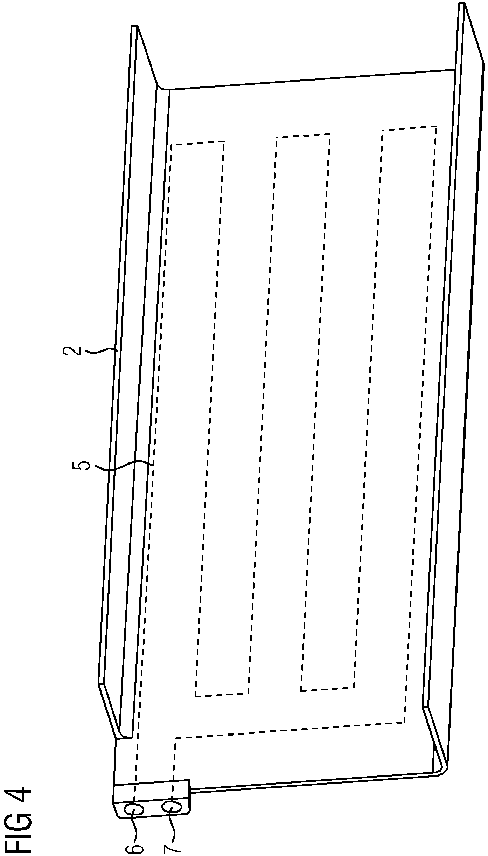

FIG 4 zeigt ein weiteres Ausführungsbeispiel eines Kühlers 2 mit generativ gefertigten Kühlkanal 5 für einen Linearmotor von unten, wie dieser beispielsweise im Zusammenspiel mit einem Linearmotor gemäß FIG 1 zum Einsatz kommt. Im Gegensatz zu dem in FIG 3 dargestellten Ausführungsbeispiel, ist durch die gestrichelte Linie ein Kühlkanal 5 visualisiert, der gegenüber dem in FIG 3 dargestellten Ausführungsbeispiel mehrere mäanderförmig ausgebildete Kühlschlangen zeigt. Hierdurch wird eine nochmals verbesserte Wärmeableitung gezielt in den zu kühlenden Bereichen sichergestellt. Die Kühlflüssigkeit kann aufgrund der Mäanderform störungsfrei fließen und so für eine sichere und optimale Entwärmung sorgen.

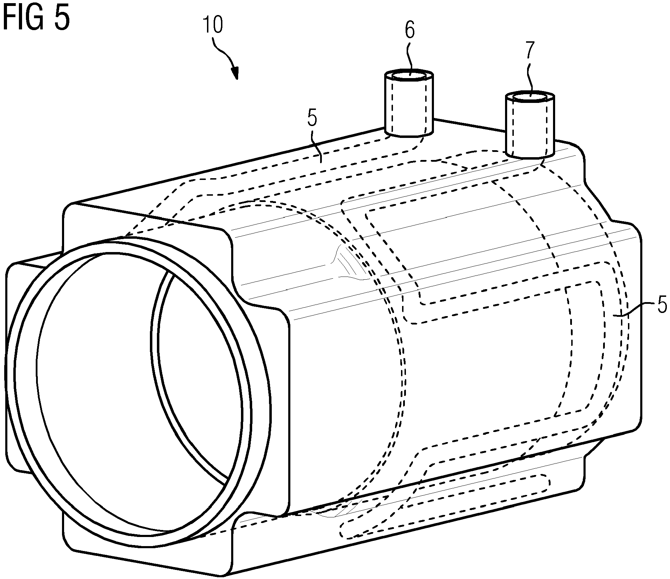

FIG 5 zeigt ein Gehäuse eines Rotationsmotors 10, mit generativ gefertigten Kühlkanal 5. Der Kühlkanal 5 weist wiederum Anschlussstutzen 6 und 7 zur Zuführung einer Flüssigkeitskühlung, insbesondere von Wasser, auf.

Die Besonderheit des in FIG 5 dargestellten Rotationsmotors 10 bzw. dessen Gehäuse besteht darin, dass in das Gehäuse der Kühlkanal 5 bzw. die Kühlkanäle 5 wiederum mittels eines generativen Verfahrens, nämlich des generativen Verfahrens "Kaltgasspritzen" erzeugt ist. Hierzu werden in einem ersten Fertigungsschritt eine erste aufgespritzte Schicht, insbesondere aus Edelstahl, Aluminium oder Kupfer auf, in die dann in einem zweiten Fertigungsschritt eine Nut gefräst oder mit einem sonstigen Verfahren eingebracht wird. In einem dritten Fertigungsschritt wird diese Nut dann mit einer wasserlöslichen Substanz befüllt, auf die dann in einem vierten Fertigungsschritt eine zweite aufgespritzte Schicht wiederum aus Edelstahl, Aluminium oder Kupfer aufgespritzt wird, während in einem fünften Fertigungsschritt die wasserlösliche Substanz wiederum aus dem dann so entstandenen Kühlkanal 5 ausgespült wird. Insgesamt kommt es somit zu einer Kombination aus additiven und zerspanenden Verfahren, zur Herstellung des druckgegossenen Gehäuses des Rotationsmotors. Das vorgestellte Verfahren ermöglicht dabei bei Bedarf eine dicht geschlossene und filigrane Kühlkanalstruktur. Darüber hinaus werden keine nachträglichen Maßnahmen zur Abdichtung oder Umlenkungen benötigt. Durch die filigrane Kühlstruktur kann die Kühlwirkung optimiert werden und die Kühlkanäle 5 können auch in Sachen Festigkeit so gestaltet werden, dass eine übermäßige Minderung der Festigkeit durch entweder zu große Kanäle verhindert werden. Wie bereits im Zusammenhang mit den Figuren 3 und 4 erläutert, können die Kühlkanäle 5 auch bei dieser Ausgestaltung bei einem Rotationsmotor axial mäanderförmig in dem Gehäuse ausgebildet werden. Damit kann durch die axiale Rippenstruktur die axiale Steifigkeit gegenüber umlaufenden Kühlkanälen deutlich erhöht werden. Für eine erhöhte Korrosionsbeständigkeit, können die Kühlkanäle 5 zusätzlich auch noch mit einem korrosionsbeständigen Material ausgestaltet sein, so dass stoffflüssig ein korrosionsunempfindlicher Kühlkanal ausgebildet sein.

Auch die Anschlussstutzen 6, 7 können ebenfalls in einem generativen Fertigungsverfahren an den Kühlkanal angeformt werden.

FIG 6 zeigt eine Prinzipdarstellung eines Ausschnitts eines Motorenteils eines Elektromotors mit generativ gefertigtem Kühlkanal.

Bei diesem Ausschnitt eines Motorenteils eines Elektromotors kann es sich beispielsweise um einen in den Figuren 3 und 4 dargestellten Kühler 2 oder auch um ein in FIG 5 dargestelltes Gehäuseteil eines Rotationsmotors handeln. FIG 6 veranschaulicht somit nochmals das Herstellungsverfahren des Kühlkanals 5. Hierzu werden auf ein Grundmaterial 14 des Motorteils bzw. des Kühlerteils in einem ersten Fertigungsschritt 20 eine erste, mittels des generativen Verfahrens Kaltgasspritzen, aufgebrachte aufgespritzte Schicht, in diese erste aufgespritzte Schicht 11 wird dann im zweiten Fertigungsschritt 21 eine Nut eingebracht, beispielsweise mittels eines zerspanenden Verfahrens, wie Fräsen. Diese Nut wird dann in einem dritten Fertigungsschritt 22 wiederum im generativen Verfahren Kaltgasspritzen mit einer wasserlöslichen Substanz 12 befüllt. Die wasserlösliche Substanz 12 sowie die erste aufgespritzte Schicht 11 wird im vierten Fertigungsschritt mit einer zweiten aufgespritzten Schicht 13 wiederum im Kaltgasspritzverfahren versehen, so dass die in FIG 6 dargestellte Grundstruktur für einen Kühlkanal 5 entsteht. Im fünften Fertigungsschritt 24 wird die wasserlösliche Substanz 12 dann aus den Kühler 2 bzw. aus dem Motorteil herausgespült, so dass der Kühlkanal 5, wie in den Figuren 3 bis 5 gezeigt, generativ entsteht.

Zusammenfassend betrifft die Erfindung somit einen Elektromotor 1, 10 mit mindestens einem Kühlkanal, wobei der Kühlkanal 5 mittels eines generativen Fertigungsverfahrens erzeugt ist. Für das Sicherstellen einer möglichst stoffschlüssigen Verbindung und damit für einen verbesserten Wärmeübergang und eine verbesserte Kühlleistung wird der Kühlkanal 5 durch den Einsatz des generativen Verfahrens Kaltgasspritzen erzeugt. Hierbei wird der Kühlkanal durch eine aufgespritzte Schicht aus Edelstahl oder Aluminium gebildet, in die eine dem Kühlkanal 5 entsprechende Nut gefräst wird, welche mit einer wasserlöslichen Substanz mit dem gleichen Verfahren gefüllt und anschließend wieder mit Edelstahl oder Aluminium verschlossen wird. Im letzten Fertigungsschritt wird die wasserlösliche Substanz ausgespült, so dass der Kühlkanal 5 entsteht. Das Verfahren ist sowohl bei flüssigkeitsgekühlten Linearmotoren als auch bei flüssigkeitsgekühlten Rotationsmotoren einsetzbar.

## Patentansprüche

1. Elektromotor (1, 10) mit mindestens einem Kühlkanal (5),
wobei der Kühlkanal (5) mittels eines generativen Fertigungsverfahrens dadurch erzeugt ist, dass der Kühlkanal (5) durch eine erste aufgespritzte Schicht (11) gebildet wird, in die eine dem Kühlkanal (5) entsprechende Nut gefräst ist, welche mit einer den Kühlkanal formenden wasserlöslichen Substanz (12) gefüllt wird, die anschließend mit einer zweiten aufgespritzten Schicht (13) verschlossen ist, so dass nach Ausspülen der wasserlöslichen Substanz der Kühlkanal (5) zur Kühlung des Elektromotors (1, 10) gebildet wird.

2. Elektromotor nach Anspruch 1,
wobei der Kühlkanal (5) mittels des generativen Fertigungsverfahrens Kaltgasspritzen gefertigt ist.

3. Elektromotor nach einem der Ansprüche 1 oder 2,
wobei als generatives Fertigungsverfahren das MPA-Verfahren (MPA = Metal Powder Application Technique) verwendet wird.

4. Elektromotor nach einem der vorhergehenden Ansprüche,
wobei erste und/oder die zweite aufgespritzte Schicht (11, 13) aus Edelstahl, Aluminium oder Kupfer gebildet wird.

5. Elektromotor nach einem der vorhergehenden Ansprüche,
wobei der Elektromotor ein flüssigkeitsgekühlten Linearmotor oder ein flüssigkeitsgekühlter Rotationsmotor ist.

6. Elektromotor nach einem der vorhergehenden Ansprüche,
wobei an den Kühlkanal (5) Anschlussstutzen (6, 7) angeformt sind, die ebenfalls in einem generativen Fertigungsverfahrens erzeugt sind.

7. Elektromotor nach einem der vorhergehenden Ansprüche,
wobei die erste und/oder die zweite aufgespritzte Schicht (11, 13) bezüglich Form und Eigenschaften derart ausgebildet ist, dass eine möglichst große Kontaktfläche entsteht.

8. Elektromotor nach einem der vorhergehenden Ansprüche,
wobei der Kühlkanal (5) mäanderförmig geformt ist.

9. Elektromotor nach einem der vorhergehenden Ansprüche,
wobei der Elektromotor ein flüssigkeitsgekühlten Linearmotor mit einem Primärteil (3) und mindestens einem Sekundärteil (4) ist und der Kühlkanal (5) in einem separaten auf dem Primärteil (3) angeordneten Kühler (2) angeordnet ist.

10. Elektromotor nach einem der Ansprüche 1 bis 7,
wobei der Elektromotor ein flüssigkeitsgekühlten Rotationsmotor ist, wobei der Kühlkanal (5) in einem druckgegossenen Gehäuse durch die Kombination aus additiven und zerspanenden Verfahren erzeugt ist.

11. Verfahren zur Herstellung eines Elektromotors, insbesondere eines Elektromotors nach einem der Ansprüche 1 bis 9, bei dem ein Kühlkanal (5) mittels eines generativen Fertigungsverfahrens dadurch erzeugt wird, dass der Kühlkanal (5) durch eine erste aufgespritzte Schicht (11) gebildet wird, in die eine dem Kühlkanal (5) entsprechende Nut gefräst wird, welche mit einer den Kühlkanal formenden wasserlöslichen Substanz (12) gefüllt wird, die anschließend mit einer zweiten aufgespritzten Schicht (13) verschlossen ist, so dass nach Ausspülen der wasserlöslichen Substanz der Kühlkanal (5) zur Kühlung des Elektromotors (1, 10) gebildet wird.

12. Verfahren nach Anspruch 11,
wobei der Kühlkanal (5) mittels des generativen Fertigungsverfahrens Kaltgasspritzen gefertigt wird.

13. Verfahren nach einem der Ansprüche 11 oder 12,
wobei als generatives Fertigungsverfahren das MPA-Verfahren (MPA = Metal Powder Application Technique) verwendet wird.

14. Verfahren nach einem der Ansprüche 11 bis 13,
wobei erste und/oder die zweite aufgespritzte Schicht (11, 13) aus Edelstahl, Aluminium oder Kupfer gebildet wird.

15. Verfahren nach einem der Ansprüche 11 bis 14,
wobei der Elektromotor (1, 10) ein flüssigkeitsgekühlten Linearmotor oder ein flüssigkeitsgekühlter Rotationsmotor ist.

16. Verfahren nach einem der Ansprüche 11 bis 15,
wobei an den Kühlkanal (5) Anschlussstutzen (6, 7) angeformt werden, die ebenfalls in einem generativen Fertigungsverfahrens erzeugt werden.

17. Verfahren nach einem der Ansprüche 11 bis 16,
wobei die erste und/oder die zweite aufgespritzte Schicht (11, 13) bezüglich Form und Eigenschaften derart aufgespritzt wird, dass eine möglichst große Kontaktfläche entsteht.

18. Verfahren nach einem der Ansprüche 11 bis 17,
wobei der Kühlkanal (5) mäanderförmig geformt wird.

19. Verfahren nach einem der Ansprüche 11 bis 18,
wobei der Elektromotor ein flüssigkeitsgekühlten Linearmotor (1) mit einem Primärteil (3) und mindestens einem Sekundärteil (4) ist und der Kühlkanal (5) in einem separaten auf dem Primärteil (3) angeordneten Kühler (2) angeordnet ist.

20. Verfahren nach einem der Ansprüche 11 bis 19,
wobei der Elektromotor ein flüssigkeitsgekühlten Rotationsmotor ist, wobei der Kühlkanal (5) in einem druckgegossenen Gehäuse durch die Kombination aus additiven und zerspanenden Verfahren erzeugt wird.

21. Kühler (2) insbesondere für einen Linearmotor (1), wobei der Kühler (2) mindestens einen Kühlkanal (5) aufweist, wobei der Kühlkanal (5) mittels eines generativen Fertigungsverfahrens dadurch erzeugt ist, dass der Kühlkanal (5) durch eine erste aufgespritzte Schicht (11) gebildet wird, in die eine dem Kühlkanal (5) entsprechende Nut gefräst ist, welche mit einer den Kühlkanal formenden wasserlöslichen Substanz (12) gefüllt wird, die anschließend mit einer zweiten aufgespritzten Schicht (13) verschlossen ist, so dass nach Ausspülen der wasserlöslichen Substanz der Kühlkanal (5) zur Kühlung des Elektromotors (1, 10) gebildet wird.
